# EUROPEAN PATENT APPLICATION

(11) **EP 2 080 670 A1**
(43) Date of publication of application: **22.07.2009**
(21) Application number: 08012573.5
(22) Date of filing: 11.07.2008
(51) Int. Cl.: B60R 9/042, B60R 9/10

(54) **Sliding box/goods-carrier for motor vehicles**

(30) Priority: 21.01.2008 IT TO20080009 U
(71) Applicant: AURILIS GROUP S.A., 69290 Craponne (FR)
(72) Inventor: Gemesio, Diego, 69290 Craponne (FR)
(74) Representative: Garavelli, Paolo

(57) **Abstract**

An improved sliding bicycle carrier (1) for motor vehicles is described, comprising at least two support bars (3), each one of such support bars (3) being adapted to be secured to a motor vehicle roof, and at least two sliding bars (9), each one of such sliding bars (9) being adapted to cooperate with a related support bar (3) for sliding in parallel with this latter one and along a direction substantially orthogonal to a running direction (D) of the motor vehicle along at least two senses (F₁, F₂), each sliding bar (9) being equipped with fastening means for at least one bicycle carrier element.

## Description

The present invention refers to an improved sliding box/goods-carrier for motor vehicles.

The present invention will be described as applied to a bicycle carrier, but it is clear that the inventive bars (support bars and sliding bars) can be applied to any box or goods-carrier or other container adapted to be transported on the roof of a motor vehicle.

It is common experience that loading one or more bicycles on a bicycle carrier assembled above the roof of a motor vehicle, could be a relatively uncomfortable operation, since, in addition to the weight of the bicycle to be lifted substantially above one's head, it is necessary to move oneself towards the roof, with a high probability of having to abut onto the vehicle body, making one's clothes dirty or risking to ruin the body paint.

In order to solve the above inconveniences, the art has proposed some arrangements of bicycle carriers of a sliding type that are able to go out of the motor vehicle shape and make bicycle loading and unloading easier. For example, DE10215971 discloses a bicycle carrier composed of sliding supports that extend as projections over the baggage compartment of a motor vehicle and to which bicycles can be hanged: it is wholly clear that such arrangement does not allow loading the bicycles over the motor vehicle roof, that instead are a non-neglectable rear encumbrance.

DE202005009558U, EP0921036, US4339223, GB2177055, JP61146655, JP59202950 instead disclose bicycle carriers that can be mounted on a motor vehicle roof, all substantially comprising at least one sliding frame that, in addition to project laterally from the vehicle shape, can basculate in order to abut onto the vehicle flank. This type of sliding bicycle carriers however require the use of relatively complex mechanisms and kinematisms that, in addition to reduce their operating reliability in time, negatively affect their sales cost.

Object of the present invention is solving the above prior art problems by providing an improved sliding box/goods-carrier that allows facilitating the loading and unloading operations for goods in general, and bicycles in particular, on/from a motor vehicle roof, though remaining simple, reliabile and inexpensive.

The above and other objects and advantages of the invention, as will result from the following description, are obtained with an improved sliding box/goods-carrier for motor vehicles as claimed in claim 1. Preferred embodiments and non-trivial variations of the present invention are the subject matter of the dependent claims.

The present invention will be better described by some preferred embodiments thereof, provided as a non-limiting example, with reference to the enclosed drawings, in which:

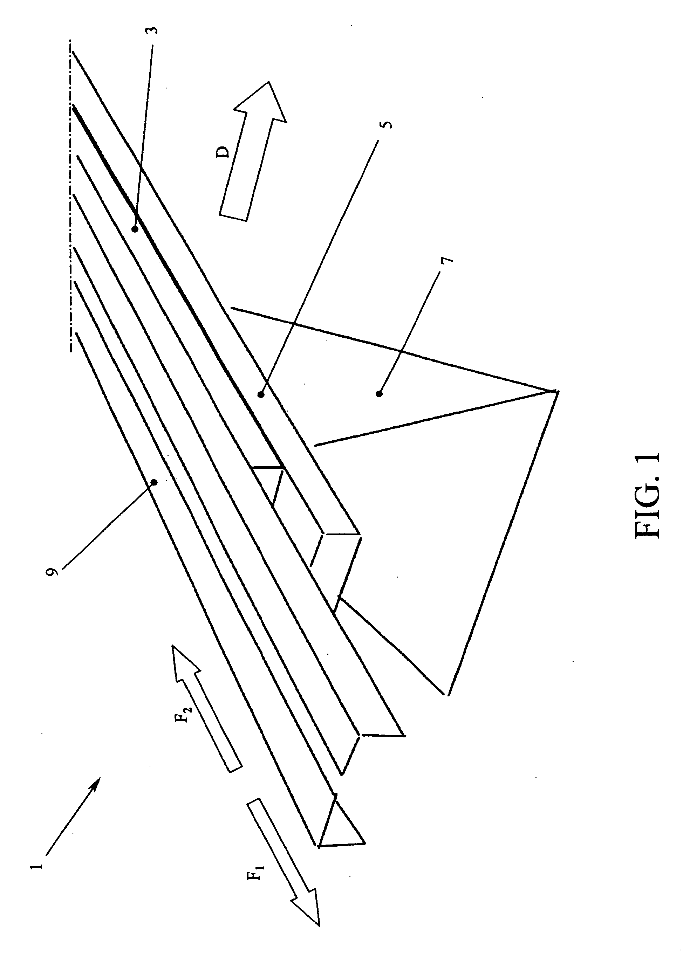

- FIG. 1 shows a top perspective view of some components of a preferred embodiment of the improved sliding box/goods-carrier for motor vehicles according to the present invention; and
- FIG. 2 shows a top perspective view of another preferred embodiment of some components of the improved sliding box/goods-carrier for motor vehicles according to the present invention.

With reference to the Figures, it is possible to note that the improved sliding box/goods-carrier 1 for motor vehicles according to the present invention comprises:
- at least two support bars 3, each of such support bars 3 being adapted to be preferably fastened, through the most adequate and substantially known mechanical fastening means, to a respective all-carrier bar 5 with which the motor vehicle roof is already equipped: as known, each all-carrier bar 5 (usually two) is fastened to the motor vehicle roof through at least two fastening feet 7. Each support bar 3 is preferably fastened in parallel with its respective all-carrier bar 5 and therefore substantially orthogonally to the running direction (shown as an example by arrow D in the Figures) of the motor vehicle. In an alternative embodiment, each support bar 3 can be equipped with its related fastening feet 7 in such a way as to be directly and autonomously fastened to the motor vehicle roof without having to perform a previous assembling of the all-carrier bars 5;
- at least two sliding bars 9 (obviously one per each support bar 3), each of such sliding bars 9 being adapted to cooperate with a related support bar 3 in order to slide in parallel with this latter one, and therefore in a direction that is substantially orthogonal to the running direction D of the motor vehicle, according to at least two senses (shown in the Figures by arrows F₁ and F₂). Each sliding bar 9 is therefore equipped with fastening means of at least one box/goods-carrier element (not shown) of a substantially known type. According to what is stated above, each sliding bar 9 can be made go out projecting along the direction of arrow F₁ from the motor vehicle shape by sliding with respect to the support bar 3, allowing to load or unload on/from the box/goods-carrier element without incurring in inconveniences and uncomfortabilities of previously-mentioned known box/goods-carriers, so that it can then be retracted by sliding according to arrow F₂ on its respective support bar 3. Obviously, when a box/goods-carrier element composed of a single piece is fastened at least to both sliding bars 9, these latter ones are taken to slide integrally and together with their respective support bars 3. Alternatively, if the box/goods-carrier element is composed of two mutually disconnected parts (typically a support for the rear wheel and a support for the front bicycle fork), it will be necessary to individually slide the sliding bars 3, at least till they are substantially made integral by the presence of at least one bicycle arranged on the box/goods-carrier element.

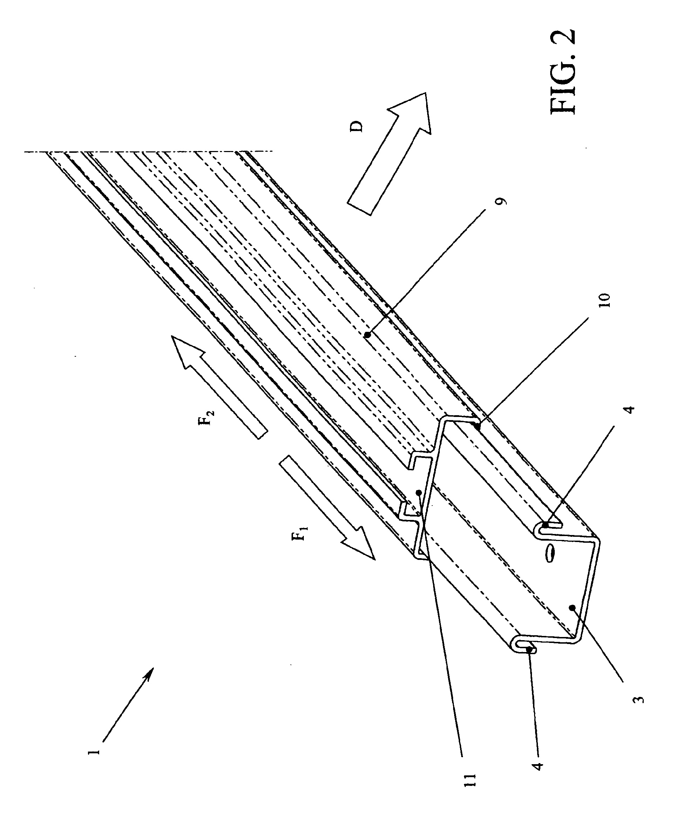

According to a preferred embodiment as shown in FIG. 2, the support bar 3 is at least one section bar made of suitable material, such as for example a metallic material like aluminium, having longitudinally and externally at least two opposte grooves 4, slidingly engaged by respective longitudinal profiles 10 of the related sliding bar 9, also this one being preferably a section bar made of adequate material, such as for example a metallic material like aluminium. Moreover, the sliding bar 9 is equipped on its top with fastening means of the box/goods-carrier element, preferably made as at least one longitudinal fastening groove 11.

Obviously, in order to favour the relative sliding between sliding bar 9 and support bar 3, suitable friction-reducing means can be used: for example, the parts of the two bars 3 and 9 in contact during the relative sliding movements could be coated with wear-preventing materials with reduced friction coefficient, such as for example nylon, LEXAN®, TEFLON® or DELRIN®.

As further alternative, between sliding bar 9 and support bar 3, revolving sliding elements could be arranged, such as for example small rollers, sliders or balls, to allow and favour their relative sliding.

It is clear that the improved sliding box/goods-carrier according to the present invention can advantageously be made in such a way as to be used with any all-carrier bar and any box/goods-carrier element currently on the market, therefore also becoming an efficient, inexpensive and practical after-market product.

## Claims

1. Sliding bicycle carrier (1) for motor vehicles **characterised in that** it comprises:
- at least two support bars (3), each one of said support bars (3) being adapted to be fastened to a roof of said motor vehicle; and
- at least two sliding bars (9), each one of said sliding bars (9) being adapted to cooperate with a related one of said support bars (3) in order to slide in parallel with this latter one and along a direction substantially orthogonal to a running direction (D) of said motor vehicle along at least two senses (F₁, F₂), each said sliding bar (9) being equipped with fastening means for at least one bicycle carrier element.

2. Bicycle carrier (1) according to claim 1, **characterised in that** each one of said support bars (3) is at least one section bar having longitudinally and externally at least two opposite grooves (4) slidingly engaged by respective longitudinal profiles (10) of a related one of said sliding bars (9), said related sliding bar (9) being a section bar made of suitable material.

3. Bicycle carrier (1) according to claim 1, **characterised in that** said fastening means for said bicycle carrier element are at least one longitudinal fastening groove (11).

4. Bicycle carrier (1) according to claim 1, **characterised in that** friction-reducing means are arranged between said sliding bar (9) and said support bar (3).

5. Bicycle carrier (1) according to claim 4, **characterised in that** parts of said sliding bar (9) and said support bar (3) in contact during relative sliding movements are coated with wear-preventing materials with reduced friction coefficient.

6. Bicycle carrier (1) according to claim 5, **characterised in that** said wear-preventing materials are nylon, LEXAN®, TEFLON® or DELRIN®.

7. Bicycle carrier (1) according to claim 4, **characterised in that** revolving sliding elements, such as small rollers, sliders or balls, are interposed between said sliding bar (9) and said support bar (3).

8. Bicycle carrier (1) according to claim 1, **characterised in that** each one of said support bars (3) is fastened to a respective all-carrier bar (5) with which said roof of said motor vehicle is equipped.

9. Bicycle carrier (1) according to claim 2, **characterised in that** each one of said support bars (3) is fastened in parallel with said respective all-carrier bar (5) and orthogonally to a running direction (D) of said motor vehicle.

10. Bicycle carrier (1) according to claim 1, **characterised in that** each one of said support bars (3) is equipped with related fastening feet (7) in order to be directly and autonomously fastened to said roof of said motor vehicle.
